# EUROPEAN PATENT SPECIFICATION

(11) **EP 4 321 262 B1**
(45) Date of publication and mention of the grant of the patent: **05.11.2025**
(21) Application number: 22911697.5
(22) Date of filing: 07.12.2022
(51) Int. Cl.: B05C 5/02, B05C 11/10, H01M 4/04, H01M 10/42

(54) **SLOT DIE COATER AND MULTI-LANE DOUBLE COATING DEVICE INCLUDING THE SAME**
SCHLITZDÜSENBESCHICHTER UND MEHRSPURIGE DOPPELBESCHICHTUNGSVORRICHTUNG DAMIT
DISPOSITIF DE REVÊTEMENT DE FILIÈRE À FENTE ET APPAREIL DE DOUBLE REVÊTEMENT À VOIES MULTIPLES LE COMPRENANT

(30) Priority: 21.12.2021 KR 20210184341
(43) Date of publication of application: 14.02.2024
(73) Proprietor: LG Energy Solution, Ltd., Seoul 07335 (KR)
(72) Inventor: PARK, Joon-Sun, Daejeon 34122 (KR); KIM, Guk-Tae, Daejeon 34122 (KR); KIM, Man-Hyeong, Daejeon 34122 (KR); CHOI, Min-Hyuck, Daejeon 34122 (KR)
(74) Representative: Plasseraud IP
(86) International application number: PCT/KR2022/019806
(87) International publication number: WO 2023/121064

(56) References cited:
- EP-A1- 3 578 272
- EP-A1- 3 578 272
- JP-A- 2004 148 184
- JP-A- 2011 096 435
- JP-A- H11 226 469
- KR-A- 20160 070 481
- KR-A- 20160 070 481
- KR-B1- 102 031 631
- US-A- 4 106 437

## Description

### TECHNICAL FIELD

The present disclosure relates to a slot die coater, and more particularly, to a slot die coater capable of simultaneously forming an electrode active material coating layer and an insulating coating layer on both side portions of the electrode active material coating layer on an electrode current collector, and a multi-lane double coating device including the slot die coater.

The present application claims priority to Korean Patent Application No. 10-2021-0184341 filed on December 21, 2021 in the Republic of Korea.

### BACKGROUND ART

In general, a secondary battery includes a battery case, and an electrode assembly accommodated together with an electrolyte in the battery case.

The electrode assembly has a structure in which a positive electrode, a separator, and a negative electrode are alternately stacked. The positive electrode and the negative electrode of the electrode assembly respectively include current collectors formed of aluminum (Al)-foil and copper (Cu)-foil. A positive electrode active material and a negative electrode active material are respectively applied to the positive electrode current collector and the negative electrode current collector, and an electrode tab is connected to a portion to which an active material is not applied, that is, a non-coated portion.

To uniformize charge and discharge characteristics of a secondary battery, a positive active material layer and a negative active material layer should be precisely coated on current collectors. To this end, a slot coating process is usually performed.

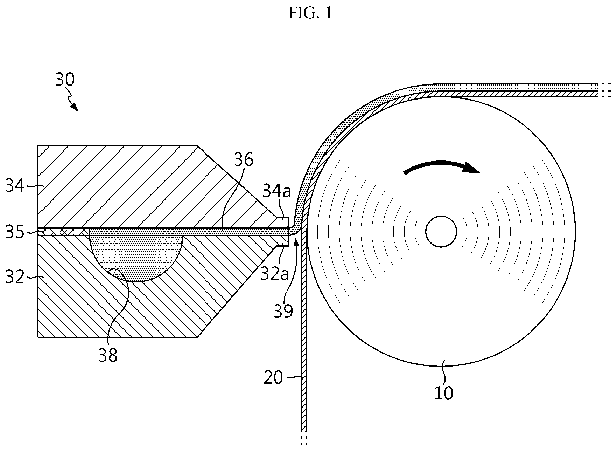

FIG. 1 is a cross-sectional view illustrating a general slot die coater for performing a slot coating process.

Referring to FIG. 1, in an electrode manufacturing method using a slot die coater 30, an electrode active material slurry discharged from the slot die coater 30 is applied to a current collector 20 transported by a coating roll 10. The electrode active material slurry discharged from the slot die coater 30 is widely applied to one surface of the current collector 20 to form an electrode active material coating layer. The slot die coater 30 includes two die blocks 32, 36 and a slot 36 is formed between the two die blocks 32, 34. An electrode active material slurry supplied from a feed unit (not shown) may be accommodated in a manifold 38, and then may be discharged through a discharge port 39 communicating with the slot 36 to form an electrode active material coating layer. Reference numerals 32a and 34a respectively denote die lips that are front ends of the die blocks 32, 34.

A coating width of the electrode active material coating layer coated on the current collector 20 is determined by a width of the slot 36. When the coating width needs to be changed, various coating widths may be achieved by changing a shim plate 35 for determining a width of the slot 36 and an inner space of the manifold 38.

A polyolefin-based material commonly used as a separator has a disadvantage in that it thermally shrinks to its original size at high temperature due to material properties. Accordingly, when a temperature of a secondary battery greatly increases, the possibility of an electrical short circuit between positive and negative electrode current collectors increases as the separator shrinks. In order to solve this problem, when the electrode active material slurry is coated on one surface of the current collector, for example, a ceramic-based insulating coating solution may be simultaneously coated on both sides of the electrode active material coating layer, which is a so-called multi-lane double coating process.

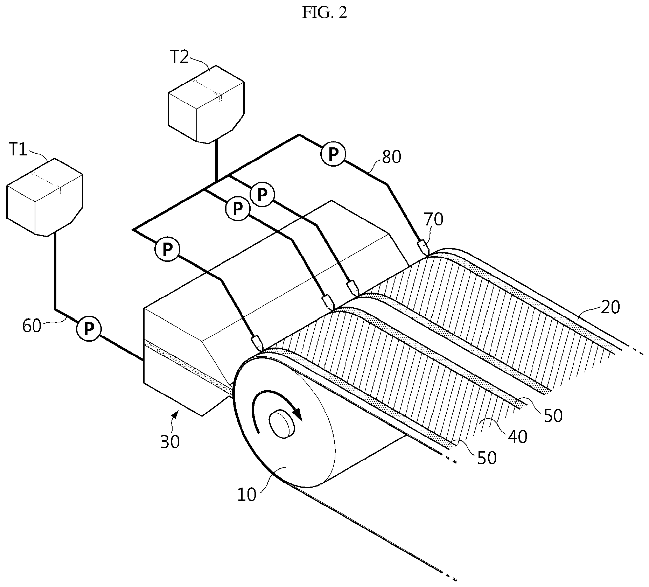

As shown in FIG. 2, a multi-line double coating device according to the prior art includes the slot die coater 30, one slurry tank T1, one slurry supply pipe 60, one pump P provided on a path of the slurry supply pipe 60, four insulating liquid dies 70 for insulating liquid coating, one insulating liquid tank T2, four insulating liquid supply pipes 80, and four pumps P provided on paths of the insulating liquid supply pipes 80.

However, the multi-lane double coating device of the prior art has a problem in that, because the number of insulating coating solution dies 70, insulating liquid supply pipes 80, and pumps P is determined according to the number of coating lanes on the current collector, an equipment layout is complicated and equipment investment cost increase as the number of coating lanes increases. Accordingly, there is a need to improve an existing multi-lane double coating device. Slot die coater according to the prior art are disclosed by JP2004148184 A, JPH11226469 A and KR20160070481 A.

### DISCLOSURE

### Technical Problem

The present disclosure is designed to solve the problems of the related art, and therefore the present disclosure is directed to providing a slot die coater capable of simultaneously forming an electrode active material coating layer and an insulating coating layer on both side portions of the electrode active material coating layer on an electrode current collector by improving a shim plate.

Also, the present disclosure is directed to reducing an equipment layout and investment cost by providing a multi-lane double coating device including the slot die coater.

However, technical objectives to be achieved by the present disclosure are not limited thereto, and other unmentioned technical objectives will be apparent to one of ordinary skill in the art from the description of the present disclosure.

### Technical Solution

The technical object is solved by a slot die coater for discharging and applying an electrode active material slurry to a current collector through a discharge port according to claim 1.

The first concave portion may be recessed by a certain thickness compared to other portions of the first surface, and the second concave portion may be recessed by a certain thickness compared to other portions of the second surface.

The slot may include a slurry slot provided between the lower die block and the first concave portion of the first surface, and an insulating coating solution slot provided between the upper die block and the second concave portion of the second surface.

The first concave portion is provided in two or more spaced apart at a predetermined interval along the width direction of the shim plate.

The two or more first concave portions may communicate with the first manifold so that the electrode active material slurry moves along the slurry slot to be applied to the current collector through the discharge port.

The second concave portion located on both sides of the first concave portion may communicate with the second manifold so that the insulating coating solution moves along the insulating coating solution slot to be applied to the current collector through the discharge port.

At least one of edge portions of the first concave portion and the second concave portion adjacent to each other is chamfered.

The lower die block may include a first feed unit configured to form a path for supplying the electrode active material slurry to the first manifold, and the upper die block may include a second feed unit configured to form a path for supplying the insulating coating solution to the second manifold.

According to another aspect of the present disclosure, there is provided a multi-lane double coating device including the slot die coater, an electrode slurry storage tank in which the electrode active material slurry is stored, one slurry supply pipe connected to the lower die block of the slot die coater from the electrode slurry storage tank, a coating solution storage tank in which the insulating coating solution is stored, and one coating solution supply pipe connected to the upper die block of the slot die coater from the coating solution storage tank.

### Advantageous Effects

According to the present disclosure, there may be provided a slot die coater capable of simultaneously coating an electrode active material coating layer and an insulating coating layer on both side portions of the electrode active material coating layer on an electrode current collector.

In particular, according to the present disclosure, a slot through which an electrode active material slurry may flow and a slot through which an insulating coating solution may flow are formed between a lower die block and an upper die block due to one shim plate. Accordingly, according to the slot die coater of the present disclosure, the efficiency and yield of a multi-lane double coating processing may be improved.

Also, according to the present disclosure, there may be provided a multi-lane double coating device that has a simpler equipment layout than that of the prior art and may reduce equipment investment cost.

The present disclosure may have various other effects, which will be described in each embodiment, or descriptions of effects that may be easily inferred by one of ordinary skill in the art will be omitted.

### DESCRIPTION OF DRAWINGS

FIG. 1 is a cross-sectional view illustrating a slot die coater for performing a slot coating process, according to the prior art.
FIG. 2 is a view schematically illustrating a configuration of a multi-lane double coating device, according to the prior art.
FIG. 3 is a view schematically illustrating a configuration of a multi-lane double coating device, according to an embodiment of the present disclosure.
FIG. 4 is a schematic exploded perspective view illustrating a slot die coater, according to an embodiment of the present disclosure.
FIG. 5 is a view illustrating a first surface of a shim plate, according to an embodiment of the present disclosure.
FIG. 6 is a view illustrating a second surface of a shim plate, according to an embodiment of the present disclosure.
FIG. 7 is a cross-sectional view illustrating a slot die coater (where a first concave portion is located), according to an embodiment of the present disclosure.
FIG. 8 is a cross-sectional view illustrating a slot die coater (where a second concave portion is located), according to an embodiment of the present disclosure.
FIG. 9 is a view illustrating a part of a discharge port of a slot die coater (viewed in a -X axis direction), according to an embodiment of the present disclosure.
FIG. 10 is a view illustrating a modified example of a shim plate of FIG. 9.
FIG. 11 is a view schematically illustrating an example where a shim plate is used, according to an embodiment of the present disclosure.

### BEST MODE

Hereinafter, preferred embodiments of the present disclosure will be described in detail with reference to the accompanying drawings.

In the specification and the claims described below, a first manifold in which an insulating coating solution is accommodated is provided in an upper die block, and a second manifold in which an electrode active material slurry is accommodated is provided in a lower die block.

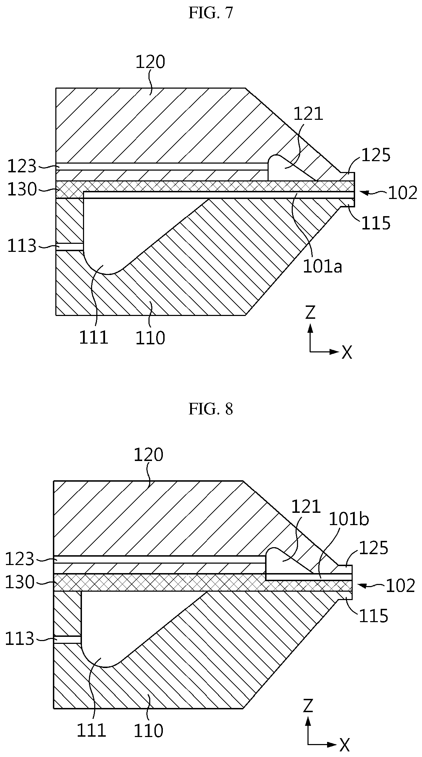

However, it is obvious to one of ordinary skill in the art that in the upper die block and the lower die block, the terms "upper" and "lower" are for convenience of explanation, and may vary according to a position of a target object or an observer. For example, when a slot die coater of FIG. 7 is vertically inverted, an upper die block of FIG. 7 may be interpreted as a lower die block and a lower die block of FIG. 7 may be interpreted as an upper die block. In this case, contrary to the following description, it should be noted that a first manifold in which an insulating coating solution is accommodated is provided in an upper die block and a second manifold in which an electrode active material slurry is accommodated is provided in a lower die block.

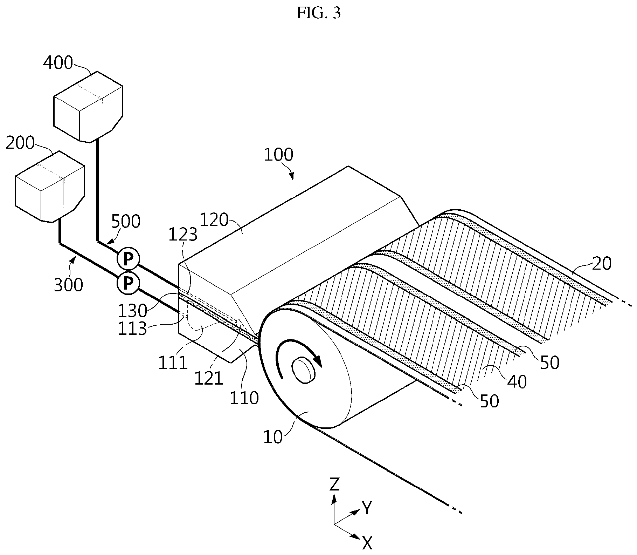

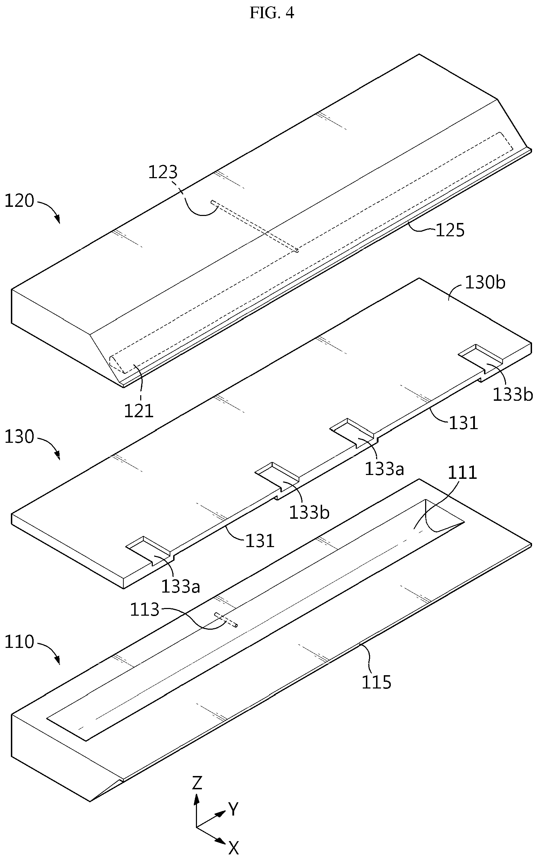

FIG. 3 is a view schematically illustrating a configuration of a multi-lane double coating device, according to an embodiment of the present disclosure. FIG. 4 is a schematic exploded perspective view illustrating a slot die coater, according to an embodiment of the present disclosure.

As shown in FIG. 3, a multi-lane double coating device according to an embodiment of the present disclosure is a device for simultaneously coating an electrode active material slurry 40 and an insulating coating solution 50 on a current collector 20, and includes a slot die coater 100, an electrode slurry storage tank 200, a slurry supply pipe 300, a coating solution storage tank 400, and one coating solution supply pipe 500.

Unlike a multi-lane double coating device (see FIG. 2) according to the prior art, in the multi-lane double coating device, the electrode slurry storage tank 200 and the slot die coater 100 are connected to one slurry supply pipe 300, and the coating solution storage tank 400 and the slot die coater 100 are also connected to one coating solution supply pipe 500, regardless of the number of lanes in which the electrode active material slurry 40 and the insulating coating solution 50 are applied to the current collector 20 (in an X direction). Accordingly, the multi-lane double coating device according to the present disclosure has a simple piping configuration and layout. Also, according to the present disclosure, because the electrode active material slurry 40 and the insulating coating solution 50 are simultaneously discharged through one slot die coater 100 and applied to the current collector 20, a coating process speed and yield are higher than those in the prior art.

Referring to FIGS. 3 and 4, the slot die coater 100 that is a main element of the multi-lane double coating device according to the present disclosure includes a lower die block 110, an upper die block 120, and a shim plate 130 configured to integrally form two types of slots between the lower die block 110 and the upper die block 120. The two types of slots refer to two types of paths through which the electrode active material slurry 40 and the insulating coating solution 50 may respectively flow toward a discharge port 102, between the lower die block 110 and the upper die block 120.

In FIG. 3, the slot die coater 100 is provided so that a direction (X direction) in which the electrode active material slurry 40 is discharged is almost horizontal (e.g., about ±5°). However, the present disclosure is not limited thereto. For example, the slot die coater 100 may be configured as a vertical die in which a direction in which the electrode active material slurry 40 is discharged is upward (Z direction).

A slot is formed between the lower die block 110 and the upper die block 120 facing each other. The shim plate 130 is provided between the lower die block 110 and the upper die block 120 to form a gap, and thus, the slot through which the electrode active material slurry 40 or the insulating coating solution 50 may flow is formed. In particular, the slot (see FIGS. 7 and 8) of the slot die coater 100 of the present disclosure includes a slurry slot 101a through which the electrode active material slurry 40 may flow and an insulating coating solution slot 101b through which the insulating coating solution 50 may flow.

As shown in FIG. 4, the lower die block 110 includes a first manifold 111 having a certain depth, longitudinally extending in a width direction (Y direction) of the lower die block 110, and communicating with the slurry slot 101a. Also, the lower die block 110 includes a first feed unit 113 that forms an internal path for supplying the electrode active material slurry 40 to the first manifold 111. The first manifold 111 is connected to the slurry storage tank 200 and the slurry supply pipe 300 provided at the outside, and the first feed unit 113 to receive the electrode active material slurry 40, as shown in FIG. 3. Although the first feed unit 113 of the present embodiment extends toward a rear side (-X direction) of the lower die block 110 in the first manifold 111, unlike in the present embodiment, for example, the first feed unit 113 may extend toward a lower side of the lower die block 110.

When the electrode active material slurry 40 is filled in the first manifold 111, the electrode active material slurry 40 is guided to flow along the slurry slot 101a and discharged to the outside through the discharge port 102.

Like the lower die block 110, the upper die block 120 includes a second manifold 121 having a certain depth, longitudinally extending in a width direction (Y direction) of the upper die block 120, and communicating with the insulating coating solution slot 101b. Also, the upper die block 120 includes a second feed unit 123 that forms an internal path for supplying the insulating coating solution 50 to the second manifold 121.

The second manifold 121 is connected to the coating solution storage tank 400 provided at the outside to receive the insulating coating solution 50. As shown in FIG. 3, the insulating coating solution 50 moves from the coating solution storage tank 400 to a rear side of the upper die block 120 through the coating solution supply pipe 500, and moves to the second manifold 121 in the inside of the upper die block 120 through the second feed unit 123 and is accommodated in the second manifold 121. Although the second feed unit 123 extends toward the rear side of the upper die block 120 in the second manifold 121 in the present embodiment, the second feed unit 123 may extend, for example, an upper side of the upper die block when necessary.

When the insulating coating solution 50 is filled in the second manifold 121, the insulating coating solution 50 is guided to flow along the insulating coating solution slot 101b and discharged to the outside through the discharge port 102.

According to the slot die coater 100, because a coating roll 10 that is rotatably provided is located in front of the slot die coater 100 and the electrode active material slurry 40 and the insulating coating solution 50 are simultaneously discharged and applied to one surface of the current collector 20 that is moved by the rotation of the coating roll 10, an electrode active material coating layer and an insulating coating layer may be continuously formed. Alternatively, a pattern coating may be intermittently formed on the current collector 20 by alternately supplying and stopping the electrode active material slurry 40 and the insulating coating solution 50.

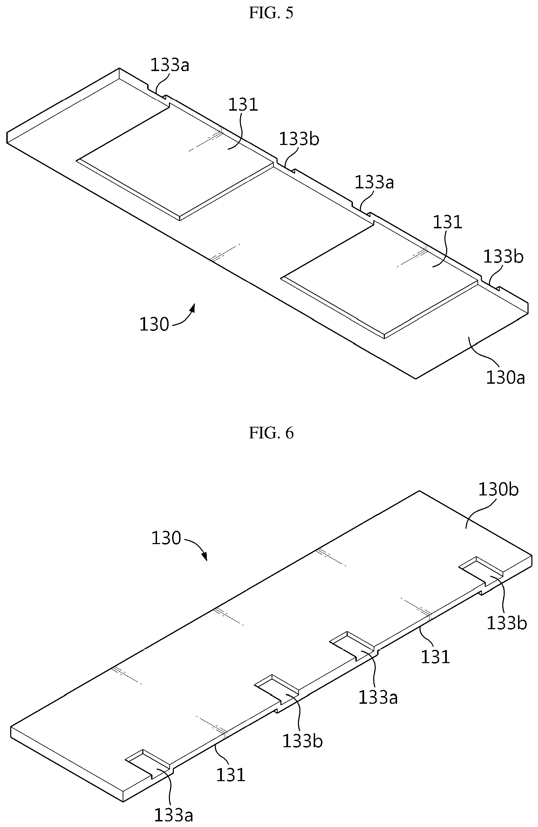

Hereinafter, the shim plate 130 for forming the slurry slot 101a and the insulating coating solution slot 101b will be described in more detail with reference to FIGS. 5 to 11.

As shown in FIGS. 5 and 6, the shim plate 130 includes a first surface 130a and a second surface 130b, and the first surface 130a and the second surface 130b are located between the lower die block 110 and the upper die block 120 so that the first surface 130a covers the first manifold 111 and faces the lower die block 110 and the second surface 130b covers the second manifold 121 and faces the upper die block 120.

The first surface 130a includes a first concave portion 131 that is upwardly concave, and the second surface 130b includes second concave portions 133a, 133b that are downwardly concave.

As shown in FIG. 5, the first concave portion 131 is recessed by a certain thickness when compared to other portions of the first surface 130a, and two first concave portions 131 may be spaced apart from each other by a certain interval in a width direction of the shim plate 130. Unlike in the present embodiment, one, or three or more first concave portions 131 may be provided.

Also, the first concave portion 131 may extend from an end (facing the discharge port 102) of the shim plate 130 in a direction (-X direction) away from the discharge port 102 by a length enough to communicate with the first manifold 111, and a width of the of the first concave portion 131 (in a ±Y direction) may correspond to a width of a coating layer of the electrode active material slurry 40 to be coated on the current collector 20.

According to this configuration of the first surface 130a of the shim plate 130, as shown in FIG. 7, a gap may be formed between a facing surface of the lower die block 110 and the first concave portion 131 of the first surface 130a, to form the slurry slot 101a corresponding to a path through which the electrode active material slurry 40 may flow.

As shown in FIG. 6, the second concave portions 133a, 133b are provided as a pair on both sides in a width direction (Y direction) of the first concave portion 131, and are recessed by a certain thickness when compared to other portions of the second surface 130b. That is, because two first concave portions 131 are provided in the present embodiment, the second concave portions 133a, 133b are provided on both sides of each first concave portion 131, and thus, a total of four second concave portions are provided. In other words, when the number of first concave portions 131 on the first surface 130a is N, the number of second concave portions 133a, 133b on the second surface 130b is 2N.

Like the first concave portion 131, the second concave portions 133a, 133b may extend from an end (facing the discharge port 102) of the shim plate 130 in a direction (-X direction) away from the discharge port 102 by a length enough to communicate with the second manifold 121, and a width of the second concave portions 133a, 133b (in the ±Y direction) may correspond to a width of an insulating coating layer to be formed on the current collector 20.

According to this configuration of the second surface 130b of the shim plate 130, as shown in FIG. 8, a gap may be formed between a facing surface of the upper die block 120 and the second concave portions 133a, 133b of the second surface 130b to form the insulating coating solution slot 101b corresponding to a path through which the insulating coating solution 50 may flow.

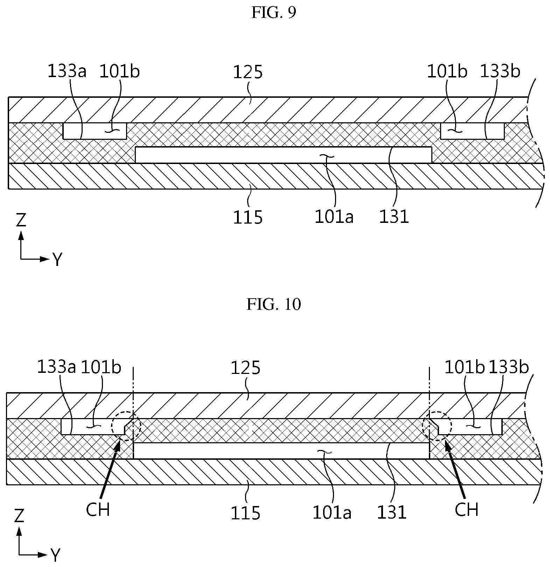

Referring back to FIGS. 7 and 8, the slurry slot 101a and the insulating coating solution slot 101b extend to the discharge port 102 of the slot die coater 100 (in the +X direction), and as shown in FIG. 9, the slurry slot 101a and the insulating coating solution slot 101b are alternately arranged in a width direction (Y direction) of the discharge port 102.

Accordingly, the electrode active material slurry 40 and the insulating coating solution 50 may be simultaneously discharged to the outside through the discharge port 102 of the slot die coater 100. The discharge port 102 is formed between a lower die lip 115 that is a front end of the lower die block 110 and an upper die lip 125 that is a front end of the upper die block 120, and may be formed when the lower die lip 115 and the upper die lip 125 are spaced apart from each other.

In addition, portions of the first surface 130a of the shim plate 130 with no first concave portions 131 are in close contact with the facing surface of the lower die block 110. Accordingly, a gap is not formed between the portions with no first concave portions 131 and the facing surface of the lower die block 110. Accordingly, the first manifold 111 may be blocked by the portions with no first concave portions 131, and thus the electrode active material slurry 40 may not move to the portions.

In contrast, as shown in FIG. 7, a gap corresponding to a depth of the first concave portion 131 is formed between portions of the first surface 130a of the shim plate 130 with the first concave portions 131 and the facing surface of the lower die block 110, to form the slurry slot 101a. Accordingly, the first concave portions 131 may communicate with the first manifold 111, and the electrode active material slurry 40 may move along the slurry slot 101 to be discharged to the outside through the discharge port 102. As such, the discharged electrode active material slurry 40 may be continuously applied to the current collector 20 that is moved by the coating roll 10.

Also, portions of the second surface 130b of the shim plate 130 with no second concave portions 133a, 133b are in close contact with the facing surface of the upper die block 120. Accordingly, a gap is not formed between the portions with no second concave portions 133a, 133b and the facing surface of the upper die block 120. Accordingly, the second manifold 121 may be blocked by the portions with no second concave portions 133a, 133b, and thus the insulating coating solution 50 may not move to the portions.

In contrast, as shown in FIG. 8, a gap corresponding to a depth of the second concave portions 133a, 133b is formed between portions of the second surface 130b of the shim plate 130 with the second concave portions 133a, 133b and the facing surface of the upper die block 120, to form the insulating coating solution slot 101b. Accordingly, the second concave portions 133a, 133b may communicate with the second manifold 121, and the insulating coating solution 50 may move along the insulating coating solution slot 101b to be discharged to the outside through the discharge port 102.

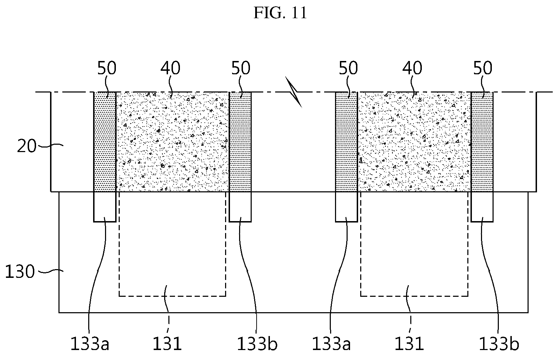

In this case, as shown in FIG. 9, because the second concave portions 133a, 133b are located on both sides of each first concave portion 131 in the width direction (Y direction) of the first concave portion 131, as shown in FIG. 11, the discharged insulating coating solution 50 may be continuously applied to both side portion of the electrode active material slurry 40 on the current collector 20.

As a modified example of the shim plate 130 of FIG. 9, the shim plate 130 may be provided so that at least one of edge portions of the first concave portion 131 and the second concave portion 133a,133b adjacent to each other is chamfered (CH). For example, one edge portion may be chamfered so that widths of the second concave portions 133a, 133b extend to both ends of the first concave portion 131 shown in FIG. 10. In this case, even a small interval difference between the slurry slot 101a and the insulating coating solution slot 101b in the width direction (Y direction) of the discharge port 102 may be compensated. Accordingly, the possibility of a non-coated portion formed at a boundary between an electrode active material slurry coating layer and an insulating coating layer may be reduced and a stable interface may be formed between the electrode active material coating layer and the insulating coating layer.

When the shim plate 130 according to an embodiment of the present disclosure is used, a 2-lane electrode active material coating layer and a 4-lane insulting coating layer are formed on the current collector 20. However, the scope of the present disclosure is not limited to the embodiment. That is, when N first concave portions 131 are formed on the first surface 130a of the shim plate130 and 2N second concave portions 133a, 133b are formed on the second surface 130b, an N-lane electrode active material coating layer and a 2N-lane insulating coating layer may be formed on the current collector 20.

As described above, according to the present disclosure, the slurry slot 101a and the insulating coating slot 101b may be formed in the slot die coater 100 by using one shim plate 130, and the slot die coater 100 capable of simultaneously coating an electrode active material coating layer and an insulating coating layer on both side portions of the current active material coating layer on the current collector 20 may be provided. Also, the multi-lane double coating device according to the present disclosure includes the slot die coater 100. Accordingly, the multi-lane double coating device (see FIG. 3) according to the present disclosure may omit the insulating coating solution die 70 and may reduce the number of insulating liquid supply pipe 80 and pumps P to 1, when compared to the multi-lane double coating device (see FIG. 2) according to the prior art. Accordingly, the multi-lane double coating device according to the present disclosure may simplify an equipment layout and reduce equipment investment cost.

It will be understood by one of ordinary skill in the art that when terms indicating directions such as upper, lower, left, and right are used, these terms are only for convenience of explanation and may vary according to a position of a target object, a position of an observer, etc.

## Claims

1. A slot die coater (100) for discharging and applying an electrode active material slurry to a current collector (20) through a discharge port (102), the slot die coater (100) comprising:
a lower die block (110) comprising a first manifold (111) intended to accommodate the electrode active material slurry;
an upper die block (120) comprising a second manifold (121) intended to accommodate an insulating coating solution (50); and
a shim plate (130) located between the lower die block (110) and the upper die block (120) to form a slot communicating with the discharge port (102),
wherein the shim plate (130) comprises:
a first concave portion (131) provided in an upwardly concave shape on a first surface (130a) located to cover the first manifold (111) of the lower die block (110); and a second concave portion (133a) provided in a downwardly concave shape on a second surface (130b) located to cover the second manifold (121) of the upper die block (120),
wherein the second concave portion (133a) is configured to be located one by one on both sides of the first concave portion (131) in a width direction, wherein
the first concave portion (131) extends from an end of the shim plate (130) facing the discharge port (102) in a direction away from the discharge port (102) by a length enough to communicate with the first manifold (111), and
the second concave portion (133a) extends from an end of the shim plate (130) in a direction away from the discharge port (102) by a length enough to communicate with the second manifold (121), wherein the first concave portion (131) is provided in two or more spaced apart at a predetermined interval along the width direction of the shim plate (130),
**characterized in that**
the number of first concave portions (131) on the first surface (130a) is N, the number of second concave portions (133a, 133b) on the second surface (130b) is 2N.

2. The slot die coater (100) according to claim 1, wherein
the first concave portion (131) is recessed by a certain thickness compared to other portions of the first surface (130a), and
the second concave portion (133a) is recessed by a certain thickness compared to other portions of the second surface (130b).

3. The slot die coater (100) according to claim 1, wherein the slot comprises
a slurry slot (101a) provided between the lower die block (110) and the first concave portion (131) of the first surface (130a), and
an insulating coating solution slot (101b) provided between the upper die block (120) and the second concave portion (133a) of the second surface (130b).

4. The slot die coater (100) according to claim 1, wherein the two or more first concave portions communicate with the first manifold (111) so that the electrode active material slurry moves along the slurry slot (101a) to be applied to the current collector (20) through the discharge port (102).

5. The slot die coater (100) according to claim 1, wherein the second concave portion (133a) located on both sides of the first concave portion (131) communicate with the second manifold (121) so that the insulating coating solution (50) moves along the insulating coating solution slot (101b) to be applied to the current collector (20) through the discharge port (102).

6. The slot die coater (100) according to claim 1, wherein at least one of edge portions of the first concave portion (131) and the second concave portion (133a) adjacent to each other is chamfered.

7. The slot die coater (100) according to claim 1, wherein
the lower die block (110) comprises a first feed unit (113) configured to form a path for supplying the electrode active material slurry to the first manifold (111), and
the upper die block (120) comprises a second feed unit (123) configured to form a path for supplying the insulating coating solution (50) to the second manifold (121).

8. A multi-lane double coating device comprising:
the slot die coater (100) according to any one of claims 1 to 7;
an electrode slurry storage tank (200) in which the electrode active material slurry is stored;
one slurry supply pipe (300) connected to the lower die block (110) of the slot die coater (100) from the electrode slurry storage tank (200);
a coating solution storage tank (400) in which the insulating coating solution (50) is stored; and
one coating solution supply pipe (500) connected to the upper die block (120) of the slot die coater (100) from the coating solution storage tank (400).

## Patentansprüche

1. Schlitzdüsen-Beschichtungseinheit (100) zum Absondern und Aufbringen einer Elektrodenaktivmaterial-Suspension an einen Stromkollektor (20) durch eine Absonderungsöffnung (102), wobei die Schlitzdüsen-Beschichtungseinheit (100) umfasst:
einen unteren Düsenblock (110), welcher einen ersten Verteiler (111), umfasst, welcher dazu vorgesehen ist, die Elektrodenaktivmaterial-Suspension aufzunehmen;
einen oberen Düsenblock (120), welcher einen zweiten Verteiler (121), umfasst, welcher dazu vorgesehen ist, eine isolierende Beschichtungslösung (50) aufzunehmen; und
eine Abstandshalterplatte (130), welche zwischen dem unteren Düsenblock (110) und dem oberen Düsenblock (120) angeordnet ist, um einen Schlitz zu bilden, welcher mit der Absonderungsöffnung (102) kommuniziert,
wobei die Abstandshalterplatte (130) umfasst:
einen ersten konkaven Abschnitt (131), welcher in einer nach oben konkaven Form an einer ersten Fläche (130a) bereitgestellt ist, welche angeordnet ist, um den ersten Verteiler (111) des unteren Düsenblocks (110) zu bedecken; und einen zweiten konkaven Abschnitt (133a), welcher in einer nach unten konkaven Form an einer zweiten Fläche (130b) bereitgestellt ist, welche angeordnet ist, um den zweiten Verteiler (121) des unteren Düsenblocks (120) zu bedecken,
wobei der zweite konkave Abschnitt (133a) dazu eingerichtet ist, in einer Breitenrichtung an beiden Seiten des ersten konkaven Abschnitts (131) einer nach dem anderen angeordnet zu sein, wobei
sich der erste konkave Abschnitt (131) von einem Ende der Abstandshalterplatte (130), welche der Absonderungsöffnung (102) zugewandt ist, in einer Richtung weg von dem der Absonderungsöffnung (102) um eine Länge erstreckt, welche ausreicht, um mit dem ersten Verteiler (111) zu kommunizieren, und
sich der zweite konkave Abschnitt (133a) von einem Ende der Abstandshalterplatte (130), in einer Richtung weg von der Absonderungsöffnung (102) um eine Länge erstreckt, welche ausreicht, um mit dem zweiten Verteiler (121) zu kommunizieren, wobei der erste konkave Abschnitt (131) in einer Anzahl von zwei oder mehr bereitgestellt ist, welche in einem vorbestimmten Intervall entlang der Breitenrichtung der Abstandshalterplatte (130) beabstandet sind, **dadurch gekennzeichnet, dass** die Anzahl von ersten konkaven Abschnitten (131) an der ersten Fläche (130a) N ist, wobei die Anzahl von zweiten konkaven Abschnitten (133a, 133b) an der zweiten Fläche (130b) 2N ist.

2. Schlitzdüsen-Beschichtungseinheit (100) nach Anspruch 1, wobei
der erste konkave Abschnitt (131) um eine vorbestimmte Dicke im Vergleich zu anderen Abschnitten der ersten Fläche (130a) vertieft ist, und
der zweite konkave Abschnitt (133a) um eine vorbestimmte Dicke im Vergleich zu anderen Abschnitten der zweiten Fläche (130b) vertieft ist.

3. Schlitzdüsen-Beschichtungseinheit (100) nach Anspruch 1, wobei der Schlitz umfasst
einen Suspensionsschlitz (101a), welcher zwischen dem unteren Düsenblock (110) und dem ersten konkaven Abschnitt (131) der ersten Fläche (130a) bereitgestellt ist, und
einen Isolierende-Beschichtungslösung-Schlitz (101b), welcher zwischen dem oberen Düsenblock (120) und dem zweiten konkaven Abschnitt (133a) der zweiten Fläche (130b) bereitgestellt ist.

4. Schlitzdüsen-Beschichtungseinheit (100) nach Anspruch 1, wobei die zwei oder mehr erste konkaven Abschnitte mit dem ersten Verteiler (111) kommunizieren, so dass sich die Elektrodenaktivmaterial-Suspension entlang des Suspensionsschlitzes (101a) bewegt, um auf den Stromkollektor (20) durch die Absonderungsöffnung (102) aufgebracht zu werden.

5. Schlitzdüsen-Beschichtungseinheit (100) nach Anspruch 1, wobei der zweite konkave Abschnitt (133a), welcher an beiden Seiten des ersten konkaven Abschnitts (131) angeordnet ist, mit dem zweiten Verteiler (121) kommuniziert, so dass sich die isolierende Beschichtungslösung (50) entlang des Isolierende-Beschichtungslösung-Schlitzes (101b) bewegt, um auf den Stromkollektor (20) durch die Absonderungsöffnung (102) aufgebracht zu werden.

6. Schlitzdüsen-Beschichtungseinheit (100) nach Anspruch 1, wobei wenigstens einer von Randabschnitten des ersten konkaven Abschnitts (131) und des zweiten konkaven Abschnitts (133a), welche benachbart zueinander sind, geschrägt ist.

7. Schlitzdüsen-Beschichtungseinheit (100) nach Anspruch 1, wobei
der untere Düsenblock (110) eine erste Zuführeinheit (113) umfasst, welche dazu eingerichtet ist, einen Pfad zum Liefern der Elektrodenaktivmaterial-Suspension an den ersten Verteiler (111) zu bilden, und
der obere Düsenblock (120) eine zweite Zuführeinheit (123) umfasst, welche dazu eingerichtet ist, einen Pfad zum Liefern der isolierenden Beschichtungslösung (50) an den zweiten Verteiler (121) zu bilden.

8. Mehrspurige Doppelbeschichtungsvorrichtung, umfassend:
die Schlitzdüsen-Beschichtungseinheit (100) nach einem der Ansprüche 1 bis 7;
einen Elektrodensuspension-Speichertank (200), in welchem die Elektrodenaktivmaterial-Suspension gespeichert ist;
ein Suspension-Lieferrohr (300), welches mit dem unteren Düsenblock (110) der Schlitzdüsen-Beschichtungseinheit (100) von dem Elektrodensuspension-Speichertank (200) verbunden ist;
einen Beschichtungslösung-Speichertank (400), in welchem die isolierende Beschichtungslösung (50) gespeichert ist; und
ein Beschichtungslösung-Lieferrohr (500), welches mit dem oberen Düsenblock (120) der Schlitzdüsen-Beschichtungseinheit (100) von dem Beschichtungslösung-Speichertank (400) verbunden ist.

## Revendications

1. Dispositif de revêtement (100) de filière à fente permettant d'évacuer et d'appliquer une suspension de matériau actif d'électrode à un collecteur (20) de courant à travers un orifice (102) d'évacuation, le dispositif de revêtement (100) de filière à fente comprenant :
un bloc (110) de filière inférieur comprenant un premier collecteur (111) destiné à accueillir la suspension de matériau actif d'électrode ;
un bloc (120) de filière supérieur comprenant un second collecteur (121) destiné à accueillir une solution (50) de revêtement isolant ; et
une plaque (130) de cale interposée entre le bloc (110) de filière inférieur et le bloc (120) de filière supérieur pour former une fente communiquant avec l'orifice (102) d'évacuation,
dans lequel la plaque (130) de cale comprend :
une première partie concave (131) disposée en une forme concave vers le haut sur une première surface (130a) située pour recouvrir le premier collecteur (111) du bloc (110) de filière inférieur ; et une seconde partie concave (133a) disposée en une forme concave vers le bas sur une seconde surface (130b) située pour recouvrir le second collecteur (121) du bloc (120) de filière supérieur,
dans lequel la seconde partie concave (133a) est configurée pour être située une par une des deux côtés de la première partie concave (131) dans une direction de largeur, dans lequel
la première partie concave (131) s'étend d'une extrémité de la plaque (130) de cale faisant face à l'orifice (102) d'évacuation dans une direction s'éloignant de l'orifice (102) d'évacuation d'une longueur suffisante pour communiquer avec le premier collecteur (111), et
la seconde partie concave (133a) s'étend à partir d'une extrémité de la plaque (130) de cale dans une direction s'éloignant de l'orifice (102) d'évacuation d'une longueur suffisante pour communiquer avec le second collecteur (121), dans lequel la première partie concave (131) est disposée en deux exemplaires ou plus espacés d'un intervalle prédéterminé le long de la direction de largeur de la plaque (130) de cale,
**caractérisé en ce que**
le nombre de premières parties concaves (131) sur la première surface (130a) est N, le nombre de secondes parties concaves (133a, 133b) sur la seconde surface (130b) est 2N.

2. Dispositif de revêtement (100) de filière à fente selon la revendication 1, dans lequel la première partie concave (131) est en retrait d'une certaine épaisseur par rapport à d'autres parties de la première surface (130a), et
la seconde portion concave (133a) est en retrait d'une certaine épaisseur par rapport à d'autres parties de la seconde surface (130b).

3. Dispositif de revêtement (100) de filière à fente selon la revendication 1, dans lequel la fente comprend
une fente (101a) de suspension disposée entre le bloc (110) de filière inférieur et la première partie concave (131) de la première surface (130a), et
une fente (101b) de solution de revêtement isolant disposée entre le bloc (120) de filière supérieur et la seconde partie concave (133a) de la seconde surface (130b).

4. Dispositif de revêtement de filière à fente (100) selon la revendication 1, dans lequel les deux premières parties concaves ou plus communiquent avec le premier collecteur (111) de sorte que la suspension de matériau actif d'électrode se déplace le long de la fente (101a) de suspension pour être appliquée au collecteur (20) de courant à travers l'orifice (102) d'évacuation.

5. Dispositif de revêtement (100) de filière à fente selon la revendication 1, dans laquelle la seconde partie concave (133a) située des deux côtés de la première partie concave (131) communique avec le second collecteur (121) de sorte que la solution (50) de revêtement isolant se déplace le long de la fente (101b) de solution de revêtement isolant pour être appliquée au collecteur de courant (20) à travers l'orifice (102) d'évacuation.

6. Dispositif de revêtement (100) de filière à fente selon la revendication 1, dans lequel au moins l'une des parties de bord de la première partie concave (131) et de la seconde partie concave (133a) adjacentes l'une à l'autre est chanfreinée.

7. Dispositif de revêtement (100) de filière à fente selon la revendication 1, dans lequel le bloc (110) de filière inférieur comprend une première unité (113) d'alimentation configurée pour former un trajet d'alimentation en suspension de matériau actif d'électrode du premier collecteur (111), et
le bloc (120) de filière supérieur comprend une seconde unité (123) d'alimentation configurée pour former un trajet d'alimentation en solution (50) de revêtement isolant du second collecteur (121).

8. Dispositif de double revêtement à voies multiples comprenant :
le dispositif de revêtement (100) de filière à fente selon l'une quelconque des revendications 1 à 7 ;
un réservoir (200) de stockage de suspension d'électrode dans lequel la suspension de matériau actif d'électrode est stockée ;
un tuyau (300) d'alimentation en suspension raccordé au bloc (110) de filière inférieur du dispositif de revêtement (100) de filière à fente à partir du réservoir (200) de stockage de suspension d'électrode ;
un réservoir (400) de stockage de solution de revêtement dans lequel la solution (50) de revêtement isolant est stockée ; et
un tuyau (500) d'alimentation en solution de revêtement raccordé au bloc (120) de filière supérieur du dispositif de revêtement (100) de filière à fente à partir du réservoir (400) de stockage de solution de revêtement.
